# EUROPÄISCHE PATENTSCHRIFT

(11) **EP 2 735 037 B1**
(45) Veröffentlichungstag und Bekanntmachung des Hinweises auf die Patenterteilung: **01.03.2017**
(21) Anmeldenummer: 12732681.7
(22) Anmeldetag: 09.07.2012
(51) Int. Cl.: H01M 2/02

(54) **VERFAHREN ZUR HERSTELLUNG EINER BATTERIE MIT EINEM METALLISCHEN GEHÄUSE UND EINER DIE AUSSENSEITE DES GEHÄUSES BEDECKENDEN ELEKTRISCHEN ISOLATIONSSCHICHT SOWIE NACH DEM VERFAHREN HERGESTELLTE BATTERIE**
METHOD FOR PRODUCING A BATTERY WITH A METALLIC HOUSING AND AN ELECTRICAL INSULATION LAYER COVERING THE OUTSIDE OF THE HOUSING, AND A BATTERY PRODUCED ACCORDING TO SAID METHOD
PROCÉDÉ DE FABRICATION D'UNE BATTERIE DOTÉE D'UN BOÎTIER MÉTALLIQUE ET D'UNE COUCHE D'ISOLANT ÉLECTRIQUE RECOUVRANT LA FACE EXTÉRIEURE DU BOÎTIER ET BATTERIE FABRIQUÉE SELON CE PROCÉDÉ

(30) Priorität: 18.07.2011 DE 102011079289
(43) Veröffentlichungstag der Anmeldung: 28.05.2014
(73) Patentinhaber: Robert Bosch GmbH, 70442 Stuttgart (DE); Samsung SDI Co., Ltd., Yongin-si, Gyeonggi-do 446-577 (KR)
(72) Erfinder: WOEHRLE, Thomas, 70469 Stuttgart-Feuerbach (DE); DUERNEGGER, Wolfgang, 73614 Schorndorf (DE)
(74) Vertreter: Bee, Joachim
(86) Internationale Anmeldenummer: PCT/EP2012/063341
(87) Internationale Veröffentlichungsnummer: WO 2013/010830

(56) Entgegenhaltungen:
- WO-A1-01/57941
- US-A1- 2004 142 190

## Beschreibung

Die vorliegende Erfindung betrifft ein Verfahren zur Herstellung einer Batterie mit einem metallischen Gehäuse und einer die Außenseite des Gehäuses bedeckenden elektrischen Isolationsschicht sowie eine nach dem Verfahren hergestellte Batterie. Die Begriffe Zelle und Batterie und galvanisches Element werden in dieser Schrift synonym verwendet.

### Stand der Technik

Batterien, insbesondere Lithium-Ionen-Zellen bzw. -Batterien, besitzen mindestens eine positive und negative Elektrode (Kathode bzw. Anode), die Lithium-Ionen (Li⁺) reversibel ein- (Interkalation) oder wieder auslagern (Deinterkalation) kann. An Lithium-Ionen-Zellen und daraus durch parallele oder serielle Verschaltung konfektionierte Batterien werden hohe Anforderungen an Sicherheit, Betriebsverhalten und Energiedichte gestellt.

Lithium-Ionen-Zellen können nach dem Stand der Technik (wie z. B. in US2004/142190 oder WO01/57941 offenbart) in
Aluminium-Verbundfolie verpackt sein, man spricht hier von sogenannten Pouch-Zellen oder Softpacks, welche nach heutigem technischen Sprachgebrauch auch als Lithium-Ionen-Polymer-Zellen oder Lithium-Polymer-Zellen bezeichnet werden. Weitere Möglichkeiten, um Lithium-Ionen-Zellen mit einem Gehäuse zu umschließen, sind rein metallische Gehäuse, man spricht hier auch von festen Gehäusen (Hardcase-Gehäusen). Rein metallische Gehäuse gibt es in zylindrischer und prismatischer Form. Rein metallische Zellgehäuse für Lithium-Ionen-Zellen, bei denen ein Potenzial auf dem Gehäuse liegt, müssen außen elektrisch isoliert werden, wenn sie zu Hochvolt-Batterien konfektioniert werden. Dazu können elektrisch durchschlagsfeste Klebebänder, zum Beispiel polyesterbasiert mit Acrylat-Kleber, oder elektrische Isolationslacke verwendet werden.

Es können verschiedene Probleme bei der Anhaftung der elektrischen Isolationsschicht an die äußere Metalloberfläche des Zellgehäuses auftreten. So kann es zu Ablösungen der Isolationsschichten kommen, oder es bestehen Inhomogenitäten an der applizierten Isolationsschicht. Zudem können auf der metallischen Außenoberfläche noch metallische Partikel anhaften, welche die applizierte elektrische Isolationsschicht mechanisch beschädigen können.

### Offenbarung der Erfindung

Die Erfindung stellt ein Verfahren zur Herstellung einer Batterie mit einem metallischen Gehäuse und einer die Außenseite des Gehäuses bedeckenden elektrischen Isolationsschicht bereit, das eines oder mehrere Probleme des Standes der Technik behebt oder zumindest mindert. Das Verfahren umfasst die Schritte:
(i) Bereitstellen eines metallischen Gehäuses oder Gehäuseteils für eine Batterie;
(ii) Corona-Behandlung der Außenseite des Gehäuses oder Gehäuseteils bei gleichzeitiger Absaugung entstehender Gase und von Partikeln; und
(iii) Auftragen der elektrischen Isolationsschicht auf der behandelten Außenseite des Gehäuses oder Gehäuseteils.

Das Gehäuse kann aus einem beliebigen Metall oder einer beliebigen Metalllegierung bestehen. Beispielsweise kann das Gehäuse aus Edelstahl gefertigt sein, insbesondere besteht das Gehäuse oder Gehäuseteil jedoch aus Aluminium oder einer Aluminiumlegierung.

Bei einer Corona-Behandlung handelt es sich bekanntlich um ein weitverbreitetes elektrochemisches Verfahren zur Oberflächen-Modifikation von Kunststoffen, bei der die Oberfläche einer elektrischen Hochspannungsentladung ausgesetzt wird. Durch eine solche Behandlung steigen allgemein die Benetzbarkeit von Oberflächen und die chemische Affinität, wodurch die Anhaftung auf solche Oberflächen erhöht wird. Überraschenderweise zeigte sich, dass mittels Corona-Behandlung die metallische Gehäuseaußenoberfläche, insbesondere bei Gehäusen aus Aluminium, etwaige organische Rückstände eliminiert bzw. vorteilhaft auf Haftungsverbesserung modifiziert werden und die Oberflächenspannung auf einen konstanten und gleichmäßigen Wert eingestellt werden kann. Letzteres ist sehr wichtig für eine gleichmäßige Benetzung und Anhaftung der elektrischen Isolationsschicht auf der metallischen Gehäuseoberfläche. Überraschend ist insbesondere, dass auch bei Aluminium-Oberflächen, trotz der Anwesenheit einer natürlichen Aluminium-Oxid-Schicht, eine Verbesserung der Haftung und Benetzbarkeit durch Corona-Behandlung stattfindet.

Die Corona-Vorbehandlung wird analog der Anwendung des Verfahrens im Kunststoffbereich zur Haftungsverbesserung durchgeführt. Der Begriff Corona beschreibt die Farbe des Blitzes, der während der Entladung entsteht. Corona-Gerätschaften enthalten im Prinzip zwei Elektroden und zusätzlich einen Isolator. Beim Anlegen einer Wechselfrequenz von ca. 20 bis 30 kHz und Spannung von ca. 25 bis 30 kV wird die Luft elektrisch leitend.

Metallische Oberflächen von Gehäusen oder Gehäusehalbteilen können noch organische Rückstände aufweisen, zum Beispiel Prozessöle, Schmier- oder Trennstoffe. Gerade flüssige Prozessrückstände vorangegangener Arbeitsschritte, auch wenn diese nur in wenigen Molekül-Lagen auf einer metallischen Oberfläche vorhanden sind, sind sehr problematisch für die Anhaftung und Auftragung einer Schicht, denn sie sind häufig gegenüber Klebstoff bzw. gegenüber dem aufgetragenen Lack sperrend. Es können eine Reihe von physikalisch und chemisch motivierten Wechselwirkungen auftreten, die unmittelbar oder zeitlich verzögert Auswirkungen auf die Schichtausbildung oder Schichteigenschaften haben.

Unmittelbare Wechselwirkungen stören den Schichtaufbau und die Homogenität der Schicht. Das Benetzungsverhalten und die Haftfestigkeit der Schicht werden hierdurch beeinflusst. Chemische Wechselwirkungen zwischen Oberflächen anhaftenden Prozessfluiden und dem Schichtsubstrat können Veränderungen schichtspezifischer Eigenschaftsmerkmale hervorrufen, die unmittelbar (z. B. Veränderungen der Isolationseigenschaften) oder langfristig zu Veränderungen des Schichtsubstrats (z. B. Verfärbung, Erweichung) oder Delamination führen. Speziell für Funktionsschichten müssen derartige Veränderungen verhindert werden. Derartige Effekte müssen während des Produktlebenszyklus für verschaltete Hochvolt-Batterien ausgeschlossen werden, um eine zuverlässige elektrische Isolation zwischen den einzelnen Zellen sicherzustellen.

Die genaue Oberflächenchemie während und nach der Corona-Behandlung ist bisher nicht bekannt. Es wird vermutet, dass unter den drastischen Bedingungen der Corona-Entladung organische Verbindungen regelrecht verbrannt oder durch Cracken in kleinere flüchtige Moleküle oder sogar in die Gehäuseoberfläche überführt werden.

Bei einer Corona-Behandlung wird die Oberflächenspannung erhöht und auf ein gleichmäßiges Niveau gebracht. Es konnte gezeigt werden, dass sich nach der Corona-Behandlung der metallischen Gehäuseoberfläche die Haftung zu einer elektrischen Isolationsschicht auch über einen längeren Zeitraum deutlich erhöht. Durch Erhöhung der Oberflächenspannung wird auch die Benetzbarkeit der Metall-Oberfläche während einer Lack-Applizierung verbessert, wodurch eine sehr gleichmäßige Beschichtung erreicht wird.

Während der Corona-Behandlung werden entstehende Gase und etwaige Partikel abgesaugt. Das bei der elektrischen Entladung entstehende Ozon wird abgesaugt. Durch die Absaugung wird zusätzlich das Metallgehäuse von anhaftendem Staub, Metall-Partikeln oder Metall-Spänen oder Prozess-Stoffen, die bei der Metallbearbeitung auftreten können, gereinigt. Durch die Absaugung während der Corona-Behandlung kann also erreicht werden, dass metallische Partikel, die prozessbedingt als Verunreinigungen auf der metallischen Oberfläche vorhanden sein können, entfernt werden. Dadurch wird eine besonders homogene, ebene und saubere Metalloberfläche mit erhöhter chemischer Affinität gegenüber applizierten Schichten bereitgestellt. Zudem könnten Partikel die elektrische Isolationsschicht über längere Zeit partiell beschädigen.

Ferner ist bevorzugt, wenn die elektrische Isolationsschicht ein Lack ist.

Alternativ und ebenfalls bevorzugt ist die elektrische Isolationsschicht ein Kunststofffilm. Der Kunststofffilm besteht vorzugsweise aus einem Polyester, einem Polyimid oder einem Polyolefin.

Ein weiterer Aspekt der Erfindung betrifft eine Batterie, insbesondere eine Lithium-Ionen-Batterie, die gemäß dem zuvor beschriebenem Verfahren hergestellt wurde. Die nach dem erfindungsgemäßen Verfahren behandelten Batterien unterscheiden sich von unbehandelten Batterien unter anderem durch eine im Bereich der Gehäuseoberfläche erhöhte Oberflächenspannung.

Die positiven Effekte der Corona-Behandlung auf die Oberflächenspannung lassen sich zum Beispiel über einen Tintentest erfassen. Er wird mit sogenannten "Dyn Testtinten" durchgeführt, die jeweils unterschiedliche Oberflächenspannungen aufweisen. Man fängt mit niedrigen Oberflächenspannungen an und fährt so lange fort, bis die Testtinte die Oberfläche nicht mehr benetzt.

Eine weitere Testmethode stellt die Randwinkelmessung bzw. Kontaktwinkelmessung dar. Hierbei wird ein Flüssigkeitstropfen auf der Gehäuseoberfläche platziert und unter starker Vergrößerung der Randwinkel (Kontaktwinkel) des Tropfens im Vergleich zur Oberfläche bestimmt. Je kleiner der Winkel, desto besser ist die Benetzung.

### Zeichnungen

Ausführungsbeispiele der Erfindung werden anhand der Zeichnungen und der nachfolgenden Beschreibung näher erläutert. Es zeigen:
Figur 1 eine schematische Darstellung einer Corona-Behandlung eines Batteriegehäuses;
Figur 2 eine schematische Darstellung der Auftragung eines elektrisch isolierenden Lackes auf ein behandeltes Batteriegehäuse; und
Figur 3 eine schematische Darstellung der Corona-Behandlung bei gleichzeitiger Absaugung von Ozon und Partikeln.

### Ausführungsformen der Erfindung

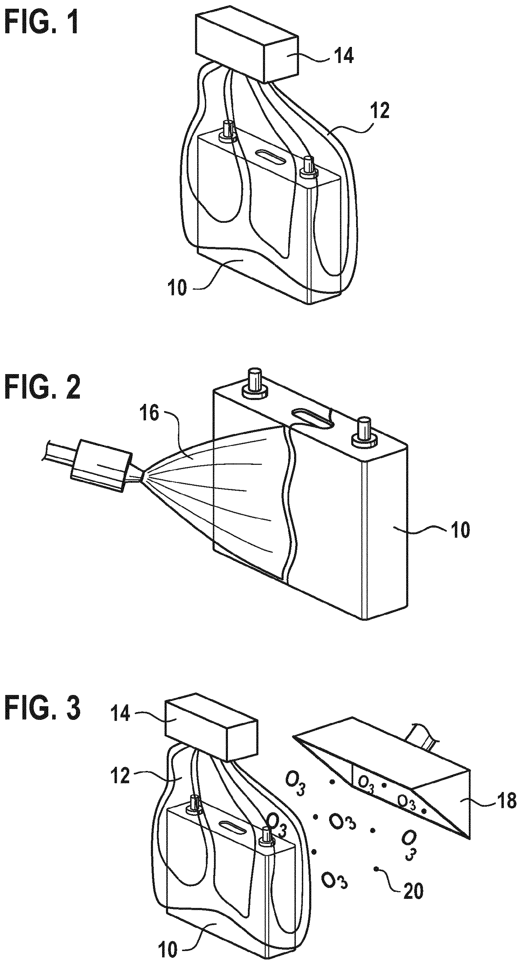

Figur 1 skizziert in stark schematisierter Weise den Verfahrensschritt der Corona-Behandlung der Außenseite eines Gehäuses 10 einer Lithium-Ionen-Batterie. Die Corona-Entladung 12 wird hier mittels der Corona-Vorrichtung 14 erzeugt.

In einem Versuch wurde das Gehäuse 10 aus einem handelsüblichen Aluminium-Walz-Blech gefertigt. Durch die Corona-Behandlung konnte nun die Oberflächenspannung von 34 mN/m auf 41 mN/m erhöht werden. Die Corona-Vorrichtung 14 war in diesem Falle ein handelsübliches Handgerät, und die Oberflächenspannungen wurden mit sogenannten Testtinten gemessen.

Nach erfolgreicher Corona-Behandlung wurde eine elektrische Isolationsschicht auf das metallische Gehäuse 10 aufgetragen. Wie in Figur 2 dargestellt, kann dies beispielsweise durch Aufsprühen eines Lackes 16 erfolgen.

Gleichzeitig mit der Corona-Behandlung kann eine Absaugung von Ozon und anderen während der Behandlung entstehenden Gasen sowie gegebenenfalls kleiner Metallpartikel 20 von der Oberfläche des Gehäuses 10 mithilfe einer Absaugvorrichtung 18 erfolgen (siehe Figur 3).

Die Güte der Haftung der Isolationsschicht wurde mit Schältests bewertet. Die gestestete Variante mit einer Aluminiumoberfläche und einem elektrischen Isolationslack zeigte stark verbesserte Resultate hinsichtlich Haftung und Oberflächengüte und wies keine Beschichtungsdefekte auf. Da die Toleranzen der elektrischen Isolationsbeschichtungen nach Corona-Behandlung in kleineren Toleranzen gegenüber unbehandelten Oberflächen schwanken, kann damit Isolationslack eingespart werden.

Gerade Inhomogenität der Beschichtung, wie Beschichtungsdefekte oder Ausdünnungen, können in Hochvolt-Anwendungen zu erheblichen Problemen führen, wenn die Spannung an Bereichen mit zu dünner Schichtdicke der Isolation durchschlägt und Teile des Batterie-Packs irreparabel beschädigt.

## Patentansprüche

1. Verfahren zur Herstellung einer Batterie mit einem metallischen Gehäuse (10) und einer die Außenseite des Gehäuses bedeckenden elektrischen Isolationsschicht, umfassend die Schritte:
(i) Bereitstellen eines metallischen Gehäuses (10) oder Gehäuseteils für eine Batterie;
(ii) Corona-Behandlung der Außenseite des Gehäuses (10) oder Gehäuseteils bei gleichzeitiger Absaugung entstehender Gase und von Partikeln; und
(iii) Auftragen der elektrischen Isolationsschicht auf der behandelten Außenseite des Gehäuses (10) oder Gehäuseteils.

2. Verfahren nach Anspruch 1, bei dem das Gehäuse (10) oder Gehäuseteil aus Aluminium oder einer Aluminiumlegierung besteht.

3. Verfahren nach Anspruch 1, bei dem die elektrische Isolationsschicht ein Lack ist.

4. Verfahren nach Anspruch 1, bei dem die elektrische Isolationsschicht ein Kunststofffilm oder ein Kunststoff basiertes Klebeband ist.

5. Verfahren nach Anspruch 4, bei dem der Kunststofffilm aus einem Polyester, einem Polyimid oder einem Polyolefin besteht.

6. Batterie, hergestellt nach dem Verfahren gemäß einem der Ansprüche 1 bis 5.

7. Batterie nach Anspruch 6, bei dem die Batterie eine Lithium-Ionen-Batterie ist.

## Claims

1. Method for producing a battery with a metallic housing (10) and an electrical insulation layer covering the outside of the housing, comprising the steps of:
(i) providing a metallic housing (10) or housing part for a battery;
(ii) corona treatment of the outside of the housing (10) or housing part with simultaneous extraction of gases arising and particles; and
(iii) applying the electrical insulation layer to the treated outside of the housing (10) or housing part.

2. Method according to Claim 1, in which the housing (10) or housing part consists of aluminum or an aluminum alloy.

3. Method according to Claim 1, in which the electrical insulation layer is a varnish.

4. Method according to Claim 1, in which the electrical insulation layer is a film of plastic or a plastic-based adhesive tape.

5. Method according to Claim 4, in which the film of plastic consists of a polyester, a polyimide or a polyolefin.

6. Battery, produced by the method according to one of Claims 1 to 5.

7. Battery according to Claim 6, in which the battery is a lithium-ion battery.

## Revendications

1. Procédé de fabrication d'une batterie dotée d'un boîtier métallique (10) et d'une couche d'isolant électrique recouvrant la face extérieure du boîtier, comprenant les étapes suivantes:
(i) préparation d'un boîtier (10) ou d'une partie de boîtier métallique pour une batterie;
(ii) traitement corona de la face extérieure du boîtier (10) ou de la partie de boîtier avec aspiration simultanée des gaz dégagés et de particules; et
(iii) dépôt de la couche d'isolant électrique sur la face extérieure traitée du boîtier (10) ou de la partie de boîtier.

2. Procédé selon la revendication 1, dans lequel le boîtier (10) ou la partie de boîtier se compose d'aluminium ou d'un alliage d'aluminium.

3. Procédé selon la revendication 1, dans lequel la couche d'isolant électrique est une laque.

4. Procédé selon la revendication 1, dans lequel la couche d'isolant électrique est un film en matière plastique ou une bande adhésive à base de matière plastique.

5. Procédé selon la revendication 4, dans lequel le film en matière plastique se compose d'un polyester, d'un polyimide ou d'une polyoléfine.

6. Batterie, fabriquée par le procédé selon l'une quelconque des revendications 1 à 5.

7. Batterie selon la revendication 6, dans laquelle la batterie est une batterie lithium-ions.
